# FASCICULE DE BREVET EUROPEEN

(11) **EP 0 913 453 B1**
(45) Date de publication et mention de la délivrance du brevet: **09.04.2003**
(21) Numéro de dépôt: 98402680.7
(22) Date de dépôt: 27.10.1998
(51) Int. Cl.: C10G 70/02

(54) **Procédé d'hydrogènation sélective des composés insaturés**
Verfahren für das Verfahren zur selektiven Hydrierung von ungesättigten Verbindugen
Process for the selective hydrogenation of unsatured compounds

(30) Priorité: 31.10.1997 FR 9713687
(43) Date de publication de la demande: 06.05.1999
(73) Titulaire: INSTITUT FRANCAIS DU PETROLE, 92852 Rueil-Malmaison Cedex (FR)
(72) Inventeur: Didillon, Blaise, 92500 Rueil Malmaison (FR); Le Peltier, Fabienne, 92500 Rueil Malmaison (FR)

(56) Documents cités:
- FR-A- 2 495 605
- US-A- 4 548 918

## Description

L'invention se rapporte à un procédé d'hydrogénation sélective de composés insaturés tels les acétyléniques ou les dioléfines, en présence d'un catalyseur renfermant au moins un support, au moins un métal du groupe VIII de la classification périodique des éléments et au moins un élément additionnel M choisi dans le groupe constitué par le germanium, l'étain, le plomb, le rhénium, le gallium, l'indium, le thallium, l'or ou l'argent, ledit procédé étant caractérisé en ce qu'on utilise un catalyseur préparé selon un procédé dans lequel l'élément additionnel M est introduit sous la forme d'au moins un composé organométallique. soluble dans un solvant aqueux et comprenant au moins une liaison carbone-M plus précisément, la présente invention concerne un nouveau procédé d'hydrogénation sélective des plus composés actéyléniques ou diéniques en particulier contenus dans les coupes issues de procédés de craquage en présence d'un catalyseur renfermant au moins un support, au moins un métal du groupe VIII de la classification périodique des éléments, et au moins un élément additionnel M choisi dans le groupe constitué par le germanium, l'étain, le plomb, le rhénium, le gallium, l'indium, l'or, l'argent et le thalium. Ce catalyseur peut aussi contenir un autre élément métallique tel que par exemple un métal alcalin ou alcalino-terreux et/ou un métalloide tel que le soufre et/ou un halogène ou un composé halogéné.

Les formulations de catalyseurs utilisés dans les procédés de conversion d'hydrocarbures ont fait l'objet d'un très grand nombre d'études. Les brevets et publications démontrant que l'addition de promoteurs à un métal de base améliore la qualité des catalyseurs sont fort nombreux.

Pour les catalyseurs d'hydrogénation sélective, on connaît de longue date les catalyseurs renfermant, outre un support, un métal tel que le palladium, le nickel ou le platine et au moins un métal additionnel M (FR-A-2 495 605) pouvant être l'étain, le germanium, le plomb, le rhénium, le gallium, l'indium, l'or ou l'argent. Ces catalyseurs dits catalyseurs bimétalliques présentent des performances en termes d'activité et/ou de sélectivité supérieures à celle des catalyseurs ne contenant que le métal principal (palladium, platine ou nickel).

Ces éléments sont ajoutés sous différentes formes telles que sels minéraux ou composés organométalliques. La façon dont ces modificateurs sont introduits n'est pas indifférente car elle conditionne fortement les propriétés du catalyseur. Ainsi l'introduction du métal M est avantageusement effectuée à l'aide d'un composé organométallique audit métal M. Cette technologie d'introduction du métal M a été décrite dans le brevet US 4 548 918 de la demanderesse. Le métal M est introduit sous la forme d'au moins un composé organométallique choisi dans le groupe formé par les complexes, en particulier les complexes carbonyles, polycétoniques des métaux M et les hydrocarbyls métaux du métal M tels que les alkyles, les cycloalkyles, les aryles, les akylaryles métaux et les arylalkyles métaux.

Cette introduction de l'élément additionnel M sous la forme d'un composé organométallique conduit à des catalyseurs plus performants mais nécessite l'emploi d'un solvant organique. Le solvant d'imprégnation décrit selon la technlogie du brevet US-4 548 918 est choisi dans le groupe constitué par les solvants organiques oxygénés contenant de 2 à 8 atomes de carbone par molécule, les hydrocarbures paraffiniques, naphténiques ou aromatiques contenant essentiellement de 6 à 15 atomes de carbone par molécule, et les composés organiques oxygénés halogénés contenant de 1 à 15 atomes de carbone par molécule. Ces solvants peuvent être utilisés seuls ou en mélange entre eux.

On a maintenant découvert dans la présente invention qu'il est possible de préparer des catalyseurs particulièrement performants avec introduction du métal M sous la forme d'un complexe organométallique soluble dans un solvant aqueux. Ceci représente un progrès considérable de facilité de mise en oeuvre lors de la fabrication du catalyseur. En effet, l'usage de quantités industrielles de solvants organiques présente d'importants inconvénients en termes de sécurité (inflammabilité, toxicité) et en termes de coûts.

Le support du catalyseur selon l'invention comporte au moins un oxyde réfractaire qui est généralement choisi parmi les oxydes de métaux des goupes IIA, IIIA, IIIB, IVA ou IVB de la classification périodique des éléments tels que par exemple les oxydes de magnésium, d'aluminium, de silicium, de titane, de zirconium ou de thorium pris seuls ou en mélange entre eux ou en mélange avec des oxydes d'autres éléments de la classification périodique . On peut aussi utiliser le charbon.

Le support préféré est l'alumine, dont la surface spécifique est avantageusement comprise entre 5 et 400 m² par gramme, de préférence entre 5 et 100 m² par gramme.

Le catalyseur selon l'invention, renferme, outre un support :
a) au moins un métal du groupe VIII choisi parmi le nickel, le palladium, le platine, le rhodium et le ruthénium et l'iridium. Le palladium, le nickel et le platine sont les métaux préférés. Le pourcentage pondéral est choisi entre 0,01 et 50 % et de préférence entre 0,05 et 1 % si le métal est un métal noble et entre 5 et 30 % si le métal est le nickel.
b) au moins un élément additionnel M choisi dans le groupe constitué par le germanium, l'étain, le plomb, le rhénium, le gallium, l'indium, l'argent, l'or et le thalium. L'étain, le germanium, l'argent et l'or sont les éléments préférés. Le pourcentage pondéral est choisi entre 0,01 et 10 %, et de préférence entre 0,02 et 5 %. On peut avantageusement dans certains cas utiliser à la fois au moins deux des métaux de ce groupe.

Le catalyseur peut contenir en plus de 0,1 à 3 % poids d'un métal alcalin ou alcalinoterreux tel que le potassium ou le sodium et/ou de 0,01 à 2 % poids d'un élément tel que le soufre.

Le catalyseur peut être préparé par différentes procédures d'imprégnation du support et l'invention n'est pas limitée à une procédure d'imprégnation déterminée. Quand on utilise plusieurs solutions, on peut procéder à des séchages et/ou des calcinations intermédiaires.

L'élément additionnel M peut être introduit lors de l'élaboration du support. Une méthode consiste par exemple à malaxer la poudre humide de support avec les précurseurs du catalyseur et à mettre ensuite en forme et sécher.

On peut introduire le métal du groupe VIII, le métal additionnel M, éventuellement le métal alcalin ou alcalino-terreux, éventuellement l'halogène ou le composé halogéné, éventuellement le métalloïde, simultanément ou successivement. Selon l'invention, la mise en contact de l'élément organométallique M est caractérisée en ce qu'il est introduit dans un solvant aqueux.

Le précurseur de l'élément M peut être choisi, sans que cette liste soit limitative, dans le groupe des composés halogénés, des hydroxydes, des oxydes, des carbonates, et des carboxylates de composés organométalliques de l'élément M. Ces composés comprenent au moins une liaison carbone-M. Le précurseur de l'élément M peut être aussi choisi parmi les composés de formule générale (R1)x M (R2)y avec x+y=valence du métal M et où R1 est choisi dans le groupe des fonctions alkyles, cycloalkyles, aryles, alkylaryles et arylalkyles, et R2 est une fonction de la forme CaHbR'c, où R' représente une fonction hydroxyde, carboxylate. PO₃H ou SO₃H.

Dans une technique de préparation selon l'invention, le catalyseur est obtenu par imprégnation du support, à l'aide d'une solution aqueuse ou organique d'au moins un composé de métal du groupe VIII, le volume de la solution étant de préférence en excès par rapport au volume de rétention du support ou égal à ce volume. Le support imprégné est ensuite filtré, éventuellement lavé à l'eau distillée, puis séché et calciné sous air habituellement entre 110 et environ 500°C, puis ensuite réduit sous hydrogène à une température habituellement comprise entre environ 20 et environ 600°C et de préférence entre environ 50 et environ 450°C. Le produit obtenu est alors imprégné par une solution aqueuse d'un composé d'étain, de germanium, de plomb, de rhénium, de gallium, d'indium, d'or, d'argent ou de thallium. D'une manière particulièrement avantageuse, on utilise une solution aqueuse d'un composé carboxylate d'étain, par exemple l'acétate de tributyl étain.

Après avoir laissé le contact entre le support imprégné du métal du groupe VIII et la solution contenant au moins un composé de l'élément M pendant plusieurs heures, le produit est filtré, éventuellement lavé à l'eau puis séché. On termine habituellement par une calcination entre 300 et 600°C, de préférence en effectuant un balayage d'air pendant plusieurs heures.

Dans une autre technique selon l'invention, le catalyseur est obtenu par imprégnation d'une solution aqueuse d'au moins un composé dudit métal M, le volume de la solution étant de préférence égal au volume de rétention du support et de manière encore plus préférée en excès par rapport à ce volume. D'une manière particulièrement avantageuse, on utilise une solution aqueuse d'un composé carboxylate d'étain. Après avoir laissé le contact entre le solide et la solution d'imprégnation pendant plusieurs heures, le produit est ensuite séché. On termine habituellement par une calcination entre 300 et 600°C, de préférence en effectuant un balayage d'air durant plusieurs heures. Le solide obtenu est ensuite imprégné à l'aide d'une solution aqueuse ou organique d'au moins un composé de métal du groupe VIII, le volume de la solution étant de préférence en excès par rapport au volume de rétention du support ou égal à ce volume. Après quelques heures de mise en contact, le produit obtenu est ensuite séché puis calciné sous air entre 300 et 600°C, de préférence en effectuant un balayage d'air durant plusieurs heures.

Avant utilisation on réduit le catalyseur sous hydrogène par exemple entre 20 et 600°C afin d'obtenir une phase métallique active. La procédure de ce traitement consiste par exemple en une montée lente de la température sous courant d'hydrogène jusqu'à la température maximale de réduction comprise par exemple entre 20 et 600°C, et de préférence entre 90 et 450°C, suivie d'un maintien pendant par exemple 1 à 6 heures à cette température.

Cette réduction pouvant être effectuée aussitôt après la calcination, ou plus tard chez l'utilisateur. Il est aussi possible de réduire directement le produit séché chez l'utilisateur.

Il est aussi possible d'effectuer la réduction préalable du composé de métal du groupe VIII en solution par des molécules organiques à caractère réducteur tels que l'acide formique. On peut alors introduire le composé de l'élément additionnel M simultanément ou successivement. Une possibilité consiste à filtrer, puis sécher le catalyseur obtenu. Il peut être alors calciné, puis réduit dans les conditions décrites ci-dessus. Il est aussi possible d'effectuer la réduction directement à partir du produit séché.

Selon l'invention, le catalyseur décrit précédemment est mis en oeuvre dans les procédés d'hydrogénation sélective des coupes contenant des compsés acétyléniques ou diéniques Les procédés d'hydrognation sélective permettent d'éliminer les composés fortement insaturés présents dans les coupes issues des procédés de craquage catalytique, thermique ou de vapocraquage afin de valoriser ces coupes soit comme charges de polymérisation soit comme produit pouvant être utilisé comme base pour carburant automobile.

Les charges typiques à traiter sont les coupes C2, C3 ou C4 de vapocraquage; les coupes essences de vapocraquage, les coupes C3, C4, C5 ou essences de craquage catalytique. La charge est généralement mise en contact avec le catalyseur selon la présente invention à une température comprise entre 20 et 200°C. Le débit massique de charge traitée par unité de masse de catalyseur peut varier de 0,1 à 10 kg/kg/h. La pression opératoire peut être fixée entre la pression atmosphérique et 6 MPa.

Les exemples qui suivent illustrent l'invention sans toutefois en limiter la portée.

### EXEMPLE 1

On prépare deux catalyseurs A et B renfermant 0.3 % poids de palladium et 0.3 % poids d'étain. Le support est une alumine de surface spécifique de 70 m² par gramme.

### Catalyseur A (comparatif)

Le catalyseur A est préparé selon les techniques de l'art antérieur. A 100 g de support alumine on ajoute 80 cm³ d'une solution aqueuse de nitrate de palladium. Le catalyseur est ensuite séché à 110°C calciné à 450°C sous air et réduit à 450°C sous courant d'hydrogène. Le catalyseur est ensuite chargé dans un réacteur contenant du toluène. Le tétrabutylétain est alors injecté à 20°C. Après 4 heures dans ces conditions, le catalyseur est filtré, lavé, séché et réduit à 450°C.

### Catalyseur B (selon l'invention)

Le catalyseur B est préparé selon les techniques décrites ci-avant mise à part que l'étain est introduit sous forme d'acétate de tributyl étain (Bu₃SnOC(O)CH₃). A 100 g de support alumine on ajoute 80 cm³ d'une solution aqueuse de nitrate de palladium. Le catalyseur est ensuite séché à 110°C calciné à 450°C sous air et réduit à 450°C sous courant d'hydrogène. Le catalyseur est ensuite chargé dans un réacteur contenant une solution ammoniacale à pH 10. Le précurseur d'étain est alors injecté à 20°C. La pression est alors portée à 4 MPa et la température à 100°C. Après 20 minutes dans-ces-conditions, le mélange réactionnel est filtré, lavé, séché et réduit à 450°C.

### EXEMPLE 2

Les catalyseurs A et B sont ensuite testés dans la réaction d'hydrogénation de l'isoprène, en réacteur parfaitement agité dans les conditions opératoires suivantes :
- charge : n-heptane + isoprène
- température : 65 °C
- pression : 1 MPa

Les résultats obtenus dans ces conditions sont rapportés dans le tableau 1. Les rendements sont exprimés en % molaire après 1 heure de fonctionnement.

**Tableau 1**

| Catalyseurs | Conversion (%) | Sélectivité (%) | |
|---|---|---|---|
| | | n-heptane | isoprène |
| A | 100 | 2 | 98 |
| B | 100 | 5 | 95 |

Le catalyseur B préparé selon l'invention, en milieu aqueux à partir d'un précurseur organométallique, présente des performances voisines, voire légèrement supérieures à celles du catalyseur A.

## Revendications

1. Procédé d'hydrogénation sélective de composés insaturés tels les acétyléniques ou les dioléfines, en présence d'un catalyseur renfermant au moins un support, au moins un métal du groupe VIII de la classification périodique des éléments et au moins un élément additionnel M choisi dans le groupe constitué par le germanium, l'étain, le plomb, le rhénium, le gallium, l'indium, le thallium, l'or ou l'argent, ledit procédé étant **caractérisé en ce qu'**on utilise un catalyseur préparé selon un procédé dans lequel l'élément additionnel M est introduit dans un solvant aqueux sous la forme d'au moins un composé organométallique soluble dans un solvant aqueux et comprenant au moins une liaison carbone-M.

2. Procédé selon la revendication 1 tel que le catalyseur contient en outre au moins un métal alcalin ou alcalino-terreux.

3. Procédé selon l'une des revendications 1 à 2 tel que le catalyseur contient en outre au moins un métalloide.

4. Procédé selon l'une des revendications 1 à 3 tel que le catalyseur contient en outre au moins un halogène ou un composé halogéné.

5. Procédé selon l'une des revendications 1 à 4 tel que dans le catalyseur, le métal du groupe VIII est choisi parmi le nickel, le palladium, le platine, le rhodium, le ruthénium et l'iridium, de préférence le platine, le palladium et le nickel.

6. Procédé selon l'une des revendications 1 à 5 tel que dans le catalyseur l'élément M est choisi parmi le germanium, l'étain, l'argent et l'or.

7. Procédé selon l'une des revendications 1 à 6 tel que dans le catalyseur le précurseur de l'élément M est choisi dans le groupe des composés halogénés, des hydroxydes, des oxydes, des carbonates et des carboxylates de composés organométalliques de l'élément M.

8. Procédé selon l'une des revendications 1 à 7 tel que dans le catalyseur le précurseur de l'élément M est choisi parmi les composés de formule générale (R1)ₓM (R2)_{y}, avec x+y=valence du métal M et où R1 est choisi dans le groupe des fonctions alkyles, cycloalkyles, aryles, alkylaryles et arylalkyles et R2 est une fonction de la forme CₐH_{b}R'_{c} où R' représente une fonction hydroxyde, carboxylate, PO₃H ou SO₃H.

9. Procédé selon l'une des revendications 1 à 8 tel que dans le catalyseur le précurseur de l'élément M est choisi dans le groupe des carboxylates de composés organiques de l'élément M.

10. Procédé selon l'une des revendications 1 à 9 tel que dans le catalyseur le précurseur de l'élément M est l'acétate de tributyl étain.

11. Procédé selon l'une des revendications 1 à 10 tel que lors de la préparation du catalyseur, le métal du groupe VIII, l'élément additionnel M, éventuellement l'halogène ou le composé halogéné, éventuellement le métal alcalin ou alcalino-terreux, éventuellement le métalloide, sont introduits successivement ou simultanément sur le support.

12. Procédé selon l'une des revendications 1 à 11 tel que l'on prépare le catalyseur selon les étapes, dans n'importe quel ordre :
• on imprègne un support à l'aide d'une solution aqueuse ou organique d'au moins un métal du groupe VIII, on filtre, on sèche, on calcine sous air, on réduit sous hydrogène,
• on imprègne le produit obtenu par une solution aqueuse d'un composé de l'élément M additionel, on filtre, on sèche, on calcine.

13. Procédé selon l'une des revendications 1 à 12 tel que dans la préparation du catalyseur on introduit l'élément additionnel M lors de l'élaboration du support.

14. Procédé selon l'une des revendications 1 à 13 tel que le catalyseur est réduit sous hydrogène à une température comprise entre 20 et 600°C, de préférence entre 90 et 500°C.

15. Procédé selon l'une des revendications 1 à 14 tel que l'on effectue une réduction préalable du composé du métal VIII en solution par des molécules organiques à caractère réducteur tel que l'acide formique.

16. Procédé selon l'une des revendications 1 à 15 dans lequel la charge à traiter est mise en contact avec le catalyseur sous une pression comprise entre la pression atmosphérique et 6 MPa et à une température comprise entre 20 et 200°C avec un débit massique de charge traitée par unité de masse de catalyseur compris entre 0,1 et 10 kg/kg/h.

17. Procédé selon l'une des revendications 1 à 16 dans lequel les charges à traiter sont les coupes C2 ou C3 de vapocraquage.

18. Procédé selon l'une des revendications 1 à 17 dans lequel la charge à traiter est une coupe C4 de vapocraquage.

19. Procédé selon l'une des revendications 1 à 18 dans lequel les charges à traiter sont les coupes essences C5 - C8 de vapocraquage.

20. Procédé selon l'une des revendications 1 à 19 dans lequel la charge à traiter est la coupe C3 de craquage catalytique.

21. Procédé selon l'une des revendications 1 à 20 dans lequel la charge à traiter est la coupe C4 de craquage catalytique.

22. Procédé selon l'une des. revendications 1 à 21 dans lequel les charges à traiter sont les coupes essences C5-C8 de craquage catalytique.

## Claims

1. A process for selective hydrogenation of unsaturated compounds such as acetylenic compounds or diolefins in the presence of a catalyst comprising at least one support, at least one metal from group VIII of the periodic table and at least one additional element M selected from the group formed by germanium, tin, lead, rhenium, gallium, indium, thallium, gold, and silver, the process being **characterized in that** the catalyst is prepared using a process in which said additional element M is introduced into an aqueous solvent in the form of at least one organometallic compound soluble in an aqueous solvent and comprising at least one carbon-M bond.

2. A process according to claim 1, in which the catalyst further contains at least one alkali or alkaline-earth metal.

3. A process according to claim 1 or claim 2, in which the catalyst further contains at least one metalloid.

4. A process according to any one of claims 1 to 3, in which the catalyst further contains at least one halogen or halogen-containing compound.

5. A process according to any one of claims 1 to 4 in which in the catalyst, the group VIII metal is selected from nickel, palladium, platinum, rhodium, ruthenium and iridium, preferably platinum, palladium or nickel.

6. A process according to any one of claims 1 to 5 in which in the catalyst, element M is selected from germanium, tin, silver and gold.

7. A process according to any one of claims 1 to 6 in which in the catalyst, the precursor of element M is selected from the group formed by halogen-containing compounds, hydroxides, oxides, carbonates and carboxylates of organometallic compounds of element M.

8. A process according to any one of claims 1 to 7 in which in the catalyst, the precursor of element M is selected from compounds with general formula (R₁)ₓM(R₂)_{y} where x+y = the valency of metal M and where R₁ is selected from the group formed by alkyl, cycloalkyl, aryl, alkylaryl and arylalkyl functions, and R₂ is a function with formula CₐH_{b}R'_{c}, where R' represents a hydroxide, carboxylate, PO₃H or SO₃H function.

9. A process according to any one of claims 1 to 8 in which in the catalyst, the precursor of element M is selected from the group formed by carboxylates of organic compounds of element M.

10. A process according to any one of claims 1 to 9 in which in the catalyst, the precursor of element M is tributyltin acetate.

11. A process according to any one of claims 1 to 10, in which during preparation of the catalyst, the group VIII metal, additional element M, optional halogen or halogen-containing compound, optional alkali or alkaline-earth metal, and optional metalloid are introduced into the support successively or simultaneously.

12. A process according to any one of claims 1 to 11, in which the catalyst is prepared by carrying out the following steps in any order:
• impregnating a support using an aqueous or organic solution of at least one group VIII metal, filtering, drying, calcining in air, and reducing in hydrogen;
• impregnating the product obtained using an aqueous solution of a compound of additional element M, filtering, drying, calcining.

13. A process according to any one of claims 1 to 12, in which when preparing the catalyst, additional element M is introduced during production of the support.

14. A process according to any one of claims 1 to 13, in which the catalyst is reduced in hydrogen at a temperature in the range 20°C to 600°C, preferably in the range 90°C to 500°C.

15. A process according to any one of claims 1 to 14, in which prior reduction of the group VIII metal compound is carried out in solution by organic molecules with a reducing nature such as formic acid.

16. A process according to any one of claims 1 to 15, in which the feed to be treated is brought into contact with the catalyst at a pressure in the range from atmospheric pressure to 6 MPa and at a temperature in the range 20°C to 200°C with a mass flow rate of treated feed per unit mass of catalyst in the range 0.1 to 10 kg/kg/h.

17. A process according to any one of claims 1 to 16, in which the feeds to be treated are C₂ or C₃ steam cracking feeds.

18. A process according to any one of claims 1 to 17, in which the feed to be treated is a C₄ steam cracking feed.

19. A process according to any one of claims 1 to 18, in which the feeds to be treated are C₅-C₈ steam cracking gasoline feeds.

20. A process according to any one of claims 1 to 19, in which the feed to be treated is a catalytic cracking C₃ cut.

21. A process according to any one of claims 1 to 20, in which the feed to be treated is a C₄ catalytic cracking cut.

22. A process according to any one of claims 1 to 21, in which the feeds to be treated are C₅-C₈ catalytic cracking gasoline cuts.

## Patentansprüche

1. Selektives Hydrierungsverfahren von ungesättigten Verbindungen wie den Acetylenen oder den Diolefinen in Gegenwart eines Katalysators, der wenigstens einen Träger, wenigstens ein Metall der Gruppe VIII des Periodensystems der Elemente und wenigstens ein zusätzliches Element M, gewählt aus der durch Germanium, Zinn, Blei, Rhenium, Gallium, Indium, Thallium, Gold oder Silber gebildeten Gruppe einschließt, wobei das Verfahren **dadurch gekennzeichnet ist, dass** man einen Katalysator verwendet, der gemäß einem Verfahren hergestellt ist, bei dem das Zusatzelement M in einem wässrigen Lösungsmittel in der Form wenigstens einer organometallischen Verbindung eingeführt wird, die in einem wässrigen Lösungsmittel löslich ist und wenigstens eine Kohlenstoff-M-Bindung umfasst.

2. Verfahren nach Anspruch 1, **dadurch gekennzeichnet, dass** der Katalysator im übrigen wenigstens ein Alkali- oder Erdalkalimetall enthält.

3. Verfahren nach einem der Ansprüche 1 bis 2, **dadurch gekennzeichnet, dass** der Katalysator im übrigen wenigstens ein Nichtmetall enthält.

4. Verfahren nach einem der Ansprüche 1 bis 3, **dadurch gekennzeichnet, dass** der Katalysator im übrigen wenigstens ein Halogen oder eine halogenierte Verbindung enthält.

5. Verfahren nach einem der Ansprüche 1 bis 4, **dadurch gekennzeichnet, dass** in dem Katalysator das Metall der Gruppe VIII unter Nickel, Palladium, Platin, Rhodium, Ruthenium und Iridium, vorzugsweise Platin, Palladium und Nickel gewählt ist.

6. Verfahren nach einem der Ansprüche 1 bis 5, **dadurch gekennzeichnet, dass** in dem Katalysator das Element M unter Germanium, Zinn, Silber und Gold gewählt ist.

7. Verfahren nach einem der Ansprüche 1 bis 6, **dadurch gekennzeichnet, dass** in dem Katalysator der Vorläufer des Elements M aus der Gruppe der halogenierten Verbindungen, der Hydroxyde, der Oxyde, der Carbonate und der Carboxylate von organometallischen Verbindungen des Elements M gewählt ist.

8. Verfahren nach einem der Ansprüche 1 bis 7, **dadurch gekennzeichnet, dass** in dem Katalysator der Vorläufer des Elements M unter den Verbindungen der allgemeinen Formel (R1)ₓM(R2)_{y}, mit x+y=Valenz des Metalls M gewählt ist und wobei R1 in der Gruppe der Alkyl-, Cycloalkyl-, Aryl-, Alkylaryl- und Arylalkylfunktionen gewählt ist und R2 eine Funktion der Formel CₐH_{b}R'_{c} ist, wobei R' eine Hydroxyd-, Carboxylat-, PO₃H- oder SO₃H-Funktion darstellt.

9. Verfahren nach einem der Ansprüche 1 bis 8, **dadurch gekennzeichnet, dass** in dem Katalysator der Vorläufer des Elements M aus der Gruppe der Carboxylate von organischen Verbindungen des Elements M gewählt ist.

10. Verfahren nach einem der Ansprüche 1 bis 9, **dadurch gekennzeichnet, dass** in dem Katalysator der Vorläufer des Elements M Tributylzinnacetat ist.

11. Verfahren nach einem der Ansprüche 1 bis 10, **dadurch gekennzeichnet, dass** bei der Herstellung des Katalysators das Metall der Gruppe VIII, das Zusatzelement M, gegebenenfalls Halogen oder die halogenierte Verbindung, gegebenenfalls das Alkali- oder Erdalkalimetall, gegebenenfalls das Nichtmetall aufeinanderfolgend oder gleichzeitig auf den Träger eingeführt werden.

12. Verfahren nach einem der Ansprüche 1 bis 11, **dadurch gekennzeichnet, dass** man den Katalysator gemäß den Stufen in irgendeiner Reihenfolge herstellt:
• man imprägniert einen Träger mit Hilfe einer wässrigen oder organischen Lösung wenigstens eines Metalls der Gruppe VIII, man filtriert, man trocknet, man kalziniert unter Luft, man reduziert unter Wasserstoff,
• man imprägniert das erhaltene Produkt durch eine wässrige Lösung einer Verbindung des Zusatzelements M, man filtriert, man trocknet, man kalziniert.

13. Verfahren nach einem der Ansprüche 1 bis 12, derart, dass in der Herstellung des Katalysators das Zusatzelement M bei der Ausarbeitung des Trägers eingeführt wird.

14. Verfahren nach einem der Ansprüche 1 bis 13, **dadurch gekennzeichnet, dass** der Katalysator unter Wasserstoff bei einer Temperatur zwischen 20 und 600°C, vorzugsweise zwischen 90 und 500°C reduziert wird.

15. Verfahren nach einem der Ansprüche 1 bis 14, derart, dass eine Vorreduktion der Verbindung des VIII-Metalls in Lösung durch organische Moleküle mit reduzierendem Charakter wie Ameisensäure durchgeführt wird.

16. Verfahren nach einem der Ansprüche 1 bis 15, bei dem die zu behandelnde Charge mit dem Katalysator unter einem Druck zwischen dem Atmosphärendruck und 6 MPa und bei einer Temperatur zwischen 20 und 200°C mit einem Massedurchsatz von zu behandelnder Charge pro Einheit Katalysatormasse zwischen 0,1 und 10 kg/kg/h kontaktiert wird.

17. Verfahren nach einem der Ansprüche 1 bis 16, wobei die zu behandelnden Chargen die C2- oder C3-Dampfcrackfraktionen sind.

18. Verfahren nach einem der Ansprüche 1 bis 17, wobei die zu behandelnde Charge eine C4-Dampfcrackfraktion ist.

19. Verfahren nach einem der Ansprüche 1 bis 18, bei dem die zu behandelnden Chargen C5- bis C8-Dampfcrackbenzinfraktionen sind.

20. Verfahren nach einem der Ansprüche 1 bis 19, wobei die zu behandelnde Charge die C3-Fraktion eines katalytischen Crackens ist.

21. Verfahren nach einem der Ansprüche 1 bis 20, wobei die zu behandelnde Charge die C4-Fraktion eines katalytischen Crackens ist.

22. Verfahren nach einem der Ansprüche 1 bis 21, wobei die zu behandelnden Chargen die C5-C8-Benzinfraktionen eines katalytischen Crackens sind.
